# EUROPEAN PATENT APPLICATION

(11) **EP 1 582 737 A2**
(43) Date of publication of application: **05.10.2005**
(21) Application number: 05006587.9
(22) Date of filing: 24.03.2005
(51) Int. Cl.: F02N 11/08, F02N 17/00

(54) **Engine starting system**

(30) Priority: 29.03.2004 JP 2004095748
(71) Applicant: Mazda Motor Corporation, Hiroshima (JP)
(72) Inventor: Tetsuno, Masayuki, Aki-gun Hiroshima (JP); Taga, Junichi, Aki-gun Hiroshima (JP); Hosoya, Hideki, Aki-gun Hiroshima (JP)
(74) Representative: Zinnecker, Armin

(57) **Abstract**

An engine starting system for automatically stopping an engine when automatic engine stop conditions are satisfied and for restarting the engine when engine restart conditions are satisfied includes a throttle valve for regulating intake air quantity and an automatic engine stop controller. When automatically stopping the engine, the automatic engine stop controller sets throttle opening K to increase the intake air quantity at first specified time t1 in an initial stage of automatic engine stop control operation, decrease the intake air quantity at second specified time t2, and detect a point in time when the engine lastly goes beyond compression stroke top dead center immediately before engine stop and increase the intake air quantity at third specified time t4 which is set at or later than the last point of going beyond the compression stroke top dead center.

## Description

### BACKGROUND OF THE INVENTION

### 1. Field of the Invention

The present invention relates to an engine starting system for automatically stopping an engine when predefined conditions for automatic engine stop are satisfied in an engine idling state, for instance, and restarting the engine when conditions for engine restart are satisfied after automatic engine stop.

### 2. Description of the Related Art

Automatic engine stop control technology, or so-called idle stop control technology, has been developed in recent years, aiming at reducing fuel consumption of and carbon dioxide (CO₂) emissions, for instance, from an engine. This technology automatically stops the engine at idle, for instance, and automatically restarts the engine at a point in time when engine restart conditions are satisfied as a result of a driver's action taken after idle stop for starting up a vehicle, for instance. Generally, engine restart performed during idle stop control operation requires quickness to instantly restart the vehicle in response to a vehicle start-up action, for instance. If a widely practiced conventional method of engine restart in which the engine is restarted by cranking an output shaft of the engine by means of a starter motor is used, however, there arises a problem that a good deal of time is needed up to completion of an engine start sequence.

Thus, it is desirable to supply fuel into a cylinder which has stopped on an expansion stroke at idle stop and cause ignition and combustion to occur in that cylinder so that the engine is instantly started with resultant combustion energy. However, if the position where a piston in the cylinder which has stopped on the expansion stroke is inappropriate, that is, if the piston has stopped at top dead center or at a position extremely close to bottom dead center, for instance, the quantity of air in the cylinder is significantly small so that it is impossible to obtain a sufficient amount of combustion energy, or the distance traveled by the piston while the combustion energy is exerted on the piston is so small that it may be impossible to normally restart the engine.

There exist conventional approaches aimed at solving the aforementioned problems. For example, Japanese Laid-open Utility Model Publication No. 1985-128975 proposes an engine starting system in which a crankshaft of an engine is provided with a braking device which is controlled in such a way that the piston in a cylinder which stops on the expansion stroke would halt at an appropriate position halfway on the expansion stroke. Also, Japanese Laid-open Patent Application No. 2001-173473 discloses an engine starting system in which, when it is judged that automatic engine stop conditions have been met, intake air pressure is increased to boost compressive pressure produced in a cylinder of which piston halts on the expansion stroke so that the piston in the cylinder stops at a specified position.

According to the engine starting system shown in Japanese Laid-open Utility Model Publication No. 1985-128975, it is necessary to provide a device for braking the crankshaft of the engine in addition to an ordinary vehicle braking device. In addition, it is necessary to control the crankshaft braking device with high precision in order that the piston in the cylinder which stops on the expansion stroke would settle at the appropriate position. A problem of this engine starting system is that it is so difficult to control the crankshaft braking device with this precision.

On the other hand, the engine starting system of Japanese Laid-open Patent Application No. 2001-173473, which is configured such that the in-cylinder compressive pressure is increased by boosting the intake air pressure at a point in time when the automatic engine stop conditions have been met, has a problem that it is difficult to properly stop the piston at a position suited for engine restart if the degree of engine speed slowdown varies causing a change in the position where the piston stops.

### SUMMARY OF THE INVENTION

In light of the aforementioned problems of the prior art, it is an object of the invention to provide an engine starting system which can efficiently improve scavenging performance of an engine at automatic engine stop and cause each piston to stop at an appropriate position, so that the engine can be restarted in a reliable fashion.

An engine starting system according to a principal (first) aspect of the Invention is for automatically stopping an engine by interrupting fuel supply for keeping the engine running when predefined automatic engine stop conditions are satisfied and for restarting the engine by injecting fuel at least into a cylinder which is on an expansion stroke at engine stop and by producing ignition and combustion therein when predefined engine restart conditions are satisfied. This engine starting system includes an intake air quantity regulator for regulating the quantity of air introduced into the cylinder, and an automatic engine stop controller for setting the intake air quantity regulator in such a state of controlling intake airflow that the intake air quantity is larger than a minimum intake air quantity necessary for keeping the engine running at a first specified time in an initial stage of automatic engine stop operation and for controlling the intake air quantity regulator to subsequently decrease the intake air quantity at a second specified time. The automatic engine stop controller detects a point in time when the engine lastly goes beyond compression stroke top dead center immediately before engine stop and increases the intake air quantity at a third specified time which is set at or later than the last point of going beyond the compression stroke top dead center.

In the context of this Specification, the expression "go (going) beyond the compression stroke top dead center" refers to a transition of any cylinder from the compression stroke to the expansion stroke via the top dead center (TDC) of a piston in the cylinder. Also, the expression "the point in time when the engine lastly goes beyond compression stroke top dead center immediately before engine stop" refers to the point in time when the cylinder which passes the compression stroke TDC for the last time immediately before engine stop.

According to the aforementioned principal aspect of the invention, the engine starting system works as follows. Specifically, in executing automatic engine stop control operation upon fulfillment of the automatic engine stop conditions, the engine starting system sets the intake air quantity regulator in such a manner that the intake air quantity becomes larger than the minimum intake air quantity necessary for keeping the engine running at the first specified time. This makes it possible ensure sufficient quantities of air introduced into individual cylinders and thereby realize efficiently enhanced exhaust gas scavenging performance. When the engine starting system works this way, air intake resistance of the engine decreases, making it possible to prevent engine speed from decreasing too quickly. This makes it possible to maintain a relatively high engine speed (or increase the number of intake, compression, expansion and exhaust strokes) during an automatic engine stopping period from a point of fuel supply interruption to a point of engine stop, so that it becomes easier to cause each piston to stop at an appropriate (target) position by properly controlling engine speed decrease rate. In addition, the increase in the number of strokes during the automatic engine stopping period serves to further enhance the exhaust gas scavenging performance.

As the automatic engine stop controller subsequently decreases the intake air quantity at the second specified time, the quantity of air in each cylinder does not increase unnecessarily during the automatic engine stopping period, whereby the engine starting system suppresses an increase in compressive reaction force acting on the piston at about the compression stroke TDC. Furthermore, since the increase in the compressive reaction force is suppressed in this way. it is possible to reduce minor variations in the engine speed as well as vibrations and acoustic noise.

The engine starting system of the invention can adjust a balance between the quantity of air introduced into the compression stroke cylinder on the final intake stroke and the quantity of air introduced into the expansion stroke cylinder on the final intake stroke by properly setting the second specified time. The piston stop position greatly depends on this balance between the quantities of air introduced into the compression stroke cylinder and the expansion stroke cylinder. Specifically, there is a marked tendency for the piston in a cylinder into which a larger quantity of air is introduced to stop closer to BDC than the piston in a cylinder into which a smaller quantity of air is introduced. Taking advantage of this tendency, it is possible to determine an appropriate timing (second specified time) for reducing the intake air quantity so that the pistons will stop at targeted positions with high accuracy.

Subsequently, the automatic engine stop controller increases the intake air quantity again at the third specified time set at or later than the last point of going beyond the compression stroke TDC. After the engine lastly goes beyond compression stroke TDC, however, every piston stops on its current stroke without proceeding to a next stroke, so that intake and exhaust valves of both the compression stroke cylinder and the expansion stroke cylinder remain closed and, therefore, the increase in the intake air quantity at the third specified time does not produce any influence on the balance between the quantities of air introduced into the compression stroke cylinder and the expansion stroke cylinder on the final intake stroke. What is directly influenced by the increase in the intake air quantity at the third specified time and later is the intake stroke cylinder into which air is introduced at that time. As intake air pressure increases if the intake air quantity is increased at the third specified time, the air intake resistance of the intake stroke cylinder decreases. This reduction in the air intake resistance causes the piston in the intake stroke cylinder to move more smoothly, serving thereby to decrease variations in the piston stop position.

After all, the aforementioned engine starting system of the invention can cause the pistons to stop at the targeted appropriate positions corresponding to in accordance with the balance between the quantities of air introduced into the compression stroke cylinder and the expansion stroke cylinder on the final intake stroke without exerting any influence on the balance of the intake air quantities with high accuracy by setting the third specified time at or later than the last point of going beyond the compression stroke TDC. Also, the engine starting system can restart the engine in a reliable fashion by doing so.

According to the Invention, the third specified time may set either generally at the same point as the last compression stroke TDC or at a point retarded by a certain time lag from the last compression stroke TDC (corresponding to a time period until the intake valve of the compression stroke cylinder is fully closed from the last compression stroke TDC, for example).

In the discussion of the present Specification, the cylinder which stops or is actually on the expansion stroke is referred to as the expansion stroke cylinder. Likewise, the cylinders which stop or are actually on the compression stroke, intake stroke and exhaust stroke are referred to as the compression stroke cylinder, intake stroke cylinder and exhaust stroke cylinder, respectively.

These and other objects, features and advantages of the present invention will become more apparent upon reading the following detailed description along with the accompanied drawings.

### BRIEF DESCRIPTION OF THE DRAWINGS

FIG. 1 is a diagram generally showing the structure of a four-cycle engine including an engine starting system according to the present invention;
FIG. 2 is an explanatory diagram showing the structure of an intake system and an exhaust system of the engine of FIG. 1;
FIGS. 3A and 3B are explanatory diagrams showing a relationship between piston positions and the quantities of air in cylinders which are on an expansion stroke and on a compression stroke at engine stop;
FIG. 4 is a time chart showing how engine speed, boost pressure and throttle opening vary during a sequence of automatic engine stop:
FIG. 5 is an enlarged time chart showing part of engine speed charted in FIG. 4 as well as changes in crank angle and a transition pattern of successive strokes of the individual cylinders:
FIG. 6 is a distribution chart showing how the engine speed during an engine stopping period is correlated with piston stop positions at engine stop;
FIG. 7 is a distribution chart showing how the engine speed at a point of top dead center (TDC) immediately before the last TDC (or at the second TDC from the last TDC) preceding automatic engine stop is correlated with piston stop position;
FIG. 8 is a flowchart showing a first half of automatic engine stop control operation:
FIG. 9 is a flowchart showing a second half of the automatic engine stop control operation;
FIG. 10 is a flowchart showing a piston stop position detecting sequence executed in a subroutine of FIG. 9;
FIGS. 11A and 11B are diagrams showing how crank angle signals output from a pair of crank angle sensors are correlated in phase:
FIG. 12 is a flowchart showing engine restart control operation for restarting the engine;
FIG. 13 is a time chart showing a sequence of combustion cycles and related operations of the engine starting system during the engine restart control operation; and
FIG. 14 is a time chart showing how the engine works, such as how the engine speed varies, during the engine restart control operation.

### DETAILED DESCRIPTION OF THE PREFERRED EMBODIMENTS OF THE INVENTION

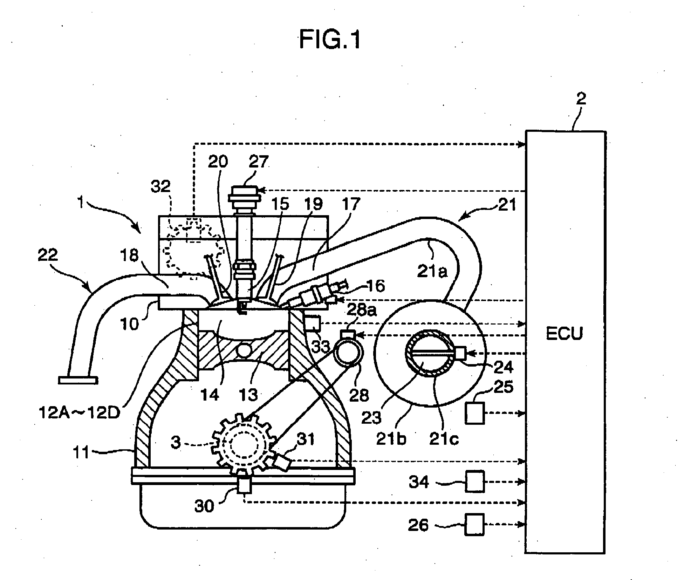

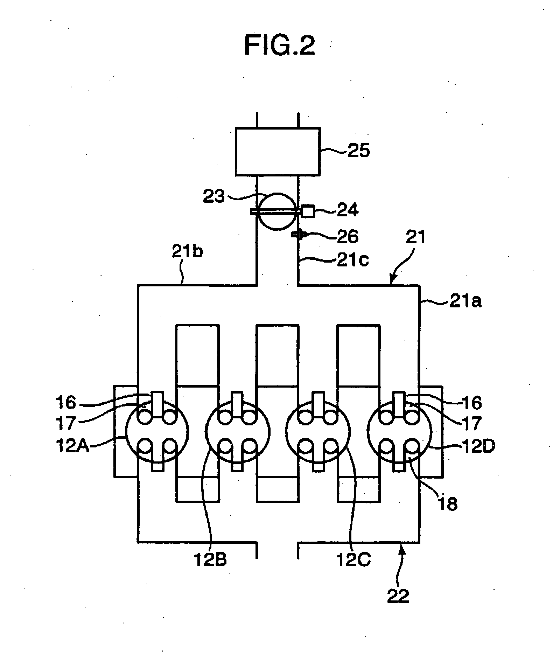

FIGS. 1 and 2 are diagrams generally showing the structure of a four-cycle spark-ignition engine provided with an engine starting system according to the present invention. This engine includes an engine body 1 having a cylinder head 10 and a cylinder block 11 and an electronic control unit (ECU) 2 for performing engine control. The engine body 1 has four cylinders 12A-12D, which may hereinafter be referred to as the first cylinder 12A, the second cylinder 12B. the third cylinder 12C and the fourth cylinder 12D, or simply as the cylinders 12 collectively. Pistons 13 connected to a crankshaft 3 are fitted in the Individual cylinders 12A-12D whereby a combustion chamber 14 is formed above the piston 13 in each of the cylinders 12A-12D as shown in FIG. 1.

Disposed at the top of the combustion chamber 14 formed in each of the cylinders 12A-12D is a spark plug 15 with an electrode of the spark plug 15 at a far end thereof located in the combustion chamber 14. The individual spark plugs 15 are connected to an ignition device 27 for actuating the spark plugs 15 to create an electric spark. There is installed a fuel injector 16 on one side (right side as illustrated in FIG. 1) of the combustion chamber 14 for injecting fuel directly into the combustion chamber 14. Incorporating a needle valve and a solenoid which are not illustrated, the fuel injector 16 is so disposed as to spray the fuel toward the vicinity of the electrode of the spark plug 15. Each of the fuel injectors 16 is actuated by a pulse signal fed from the ECU 2. When this pulse signal is input, the fuel injector 16 opens for a period of time corresponding to the pulse-length of the pulse signal to inject the fuel in a quantity corresponding to valve opening time into the cylinder 12.

There are formed intake ports 17 and exhaust ports 18 opening into the combustion chambers 14 of the individual cylinders 12A-12D at upper portions thereof with intake valves 19 and exhaust valves 20 provided in the intake ports 17 and the exhaust ports 18. respectively. The intake valves 19 and the exhaust valves 20 are actuated by valve actuating mechanisms (not shown) including camshafts. Opening and closing timing of the intake and exhaust valves 19, 20 of the individual cylinders 12A-12D is preset such that the cylinders 12A-12D undergo successive combustion cycles of intake, compression, expansion and exhaust strokes with a specific phase delay from one cylinder to another.

The intake ports 17 are connected to an intake passage 21 while the exhaust ports 18 are connected to an exhaust passage 22. A downstream part of the intake passage 21 close to the intake ports 17 is divided into four independent branched intake channels 21a which are connected to the individual cylinders 12A-12D as shown in FIG. 2. Upstream ends of these branched intake channels 21a are connected to a surge tank 21b. A portion of the intake passage 21 further upstream of the surge tank 21b constitutes a common intake passage portion 21c which supplies air to all of the cylinders 12A-12D. Provided in the common intake passage portion 21c is a throttle valve (intake air quantity regulator) 23 associated with an actuator 24 for driving the throttle valve 23 which is a rotary valve. Provided further in the common intake passage portion 21c are an airflow sensor 25 for detecting the quantity of intake air and outputting a resultant sensing signal to the ECU 2 and an intake air pressure sensor 26 for detecting intake air pressure (negative pressure) and outputting a resultant sensing signal to the ECU 2.

The engine body 1 is further provided with an alternator 28 which is connected to the crankshaft 3 by a timing belt, for example. Although not illustrated in detail, the alternator 28 has a built-in regulator circuit 28a which regulates the amount of electric power generated by the alternator 28 by controlling a current flowing through a field coil to vary output voltage according to a control signal fed from the ECU 2 to the regulator circuit 28a. Essentially, the amount of electric power generated is controlled according to the amount of load of on-board electric devices and battery.

The engine further includes a pair of first and second crank angle sensors 30, 31 for detecting the angle of rotation of the crankshaft 3. The ECU 2 determines engine speed based on a sensing signal output from the first crank angle sensor 30. Also, as will be later discussed in detail. the ECU 2 determines the direction and angle of rotation of the crankshaft 3 from mutually phase-offset sensing signals (first crank angle signal CA1 and second crank angle signal CA2) output from the two crank angle sensors 30, 31 as will be later discussed in detail.

The engine further includes cam angle sensors 32 for detecting specific rotational positions of the aforementioned camshafts for identifying the individual cylinders 12A-12D, a water temperature sensor 33 for detecting the temperature of engine cooling water and an accelerator stroke sensor 34 for detecting throttle opening corresponding to the amount of depression of an accelerator pedal by a driver. Sensing signals output from these sensors 32, 33. 34 are input into the ECU 2.

upon receiving the sensing signals fed from the individual sensors 25, 26, 30-34 mentioned above, the ECU 2 outputs a control signal (pulse signal) for controlling the quantity of fuel to be injected and fuel injection timing to each fuel injector 16, a control signal for controlling ignition timing to the ignition device 27 connected to the spark plugs 15 for actuating the individual spark plugs 15, and a control signal for controlling the opening of the throttle valve 23 to the actuator 24. While a detailed description will be given later, the ECU 2 automatically stops the engine by cutting fuel injection into the individual cylinders 12A-120 when predefined conditions for automatic engine stop are met during engine idle operation, and the ECU 2 automatically restarts the engine when predefined conditions for engine restart, such as depression of the accelerator pedal by the driver, are met subsequently. The ECU 2 incorporates an automatic engine stop control function for allowing the aforementioned automatic engine stop control operation to be executed at idle engine stop.

The engine of the present embodiment is constructed as follows. Specifically, when restarting the engine from an idle stop state by the aforementioned automatic engine stop control operation (idle stop control operation), the ECU 2 produces initial combustion in one of the cylinders 12 which is initially on a compression stroke to force down the piston 13 in the compression stroke cylinder 12, thereby causing the crankshaft 3 to turn a little in a reverse running direction thereof. As a result, the piston 13 in the cylinder 12 which was initially on an expansion stroke is caused to once ascend so that a mixture in the same cylinder 12 is compressed. In this condition, the mixture in the cylinder 12 which was initially on the expansion stroke is ignited to cause combustion in the cylinder 12 to produce a torque acting on the crankshaft 3 in a forward running direction thereof to restart the engine.

To properly restart the engine by just igniting fuel injected into a particular cylinder as mentioned above without the aid of a starter motor, it is necessary to produce sufficient combustion energy by combusting the mixture in the cylinder 12 which was on the expansion stroke at idle stop to ensure that the piston 13 in the cylinder 12 which will reach the compression stroke top dead center (TDC) (or the cylinder 12 which was on the compression stroke at idle stop) can subsequently go beyond TDC overwhelming a compressive reaction force acting on the piston 13. It is therefore essential for the cylinder 12 which was on the expansion stroke at idle stop to hold a sufficient quantity of air necessary for combustion to ensure reliable engine restart.

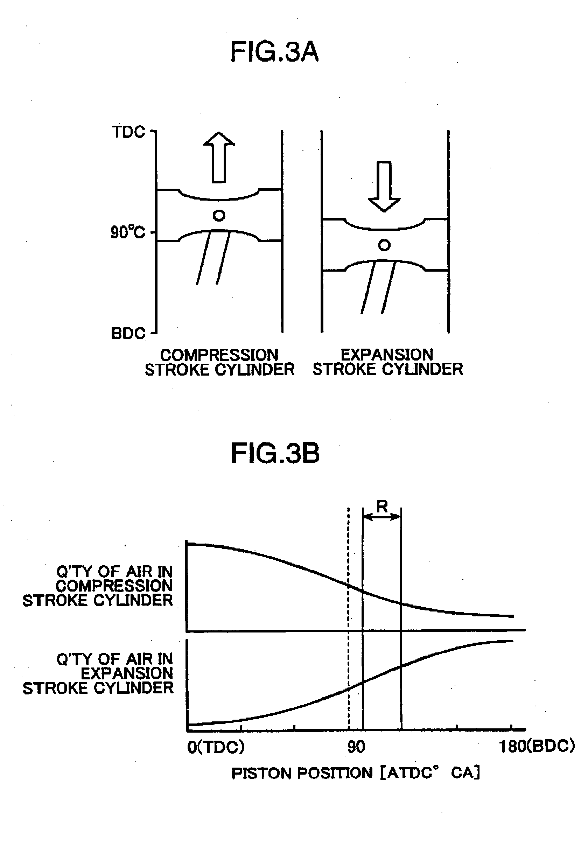

As shown in FIGS. 3A and 3B, the aforementioned compression stroke cylinder 12 and expansion stroke cylinder 12 are offset in phase from each other by as much as 180° in terms of crank angle so that the pistons 13 in these cylinders 12 move in opposite directions. If the piston 13 initially on the expansion stroke cylinder 12 is located at a point closer to bottom dead center (BDC) than a midpoint of the expansion stroke, sufficient combustion energy is obtained since the expansion stroke cylinder 12 contains a sufficient quantity of air. If the piston 13 initially on the expansion stroke cylinder 12 is located at a point extremely closer to BDC at idle stop, however, the quantity of air in the compression stroke cylinder 12 at idle stop would be too small, making it difficult to obtain an adequate quantity of air needed for reversing the crankshaft 3 by initial combustion at engine restart.

By comparison, if it is possible to cause the piston 13 initially on the expansion stroke cylinder 12 to stop at about the midpoint of the expansion stroke, or within a specified (target) range R situated more or less closer to BDC than a point of a crank angle of 90° after the compression stroke TDC, such as a range of 100° to 120° after the compression stroke TDC (ATDC) in terms of crank angle, a specific quantity of air would be maintained within the cylinder 12 initially on the compression stroke. This would make it possible to obtain such a level of combustion energy that is high enough to cause the crankshaft 3 to turn a little in the reverse running direction by the initial combustion. Moreover, by maintaining a sufficient quantity of air in the cylinder 12. initially on the compression stroke, it would become possible to generate a sufficient amount of combustion energy for causing the crankshaft 3 to turn in the forward running direction.

Accordingly, the ECU 2 performs control operation as discussed in the following such that the piston 13 initially on the expansion stroke cylinder 12 will stop within the aforementioned range R.

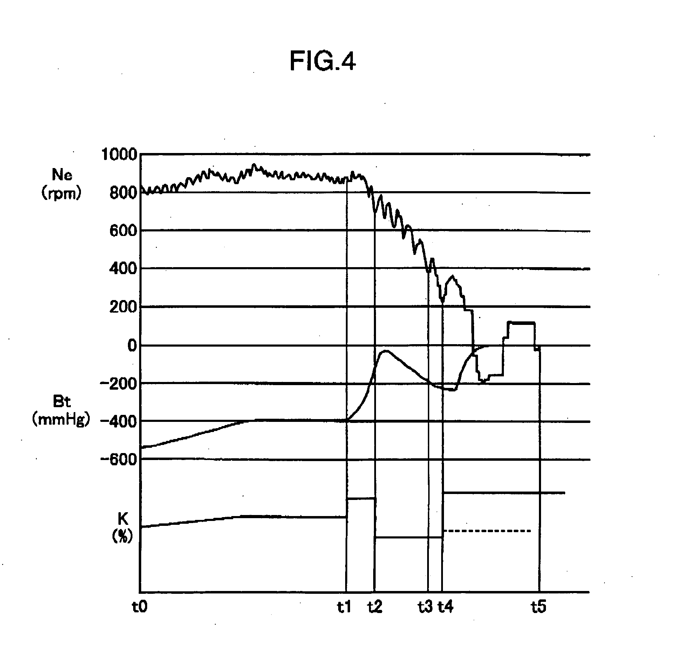

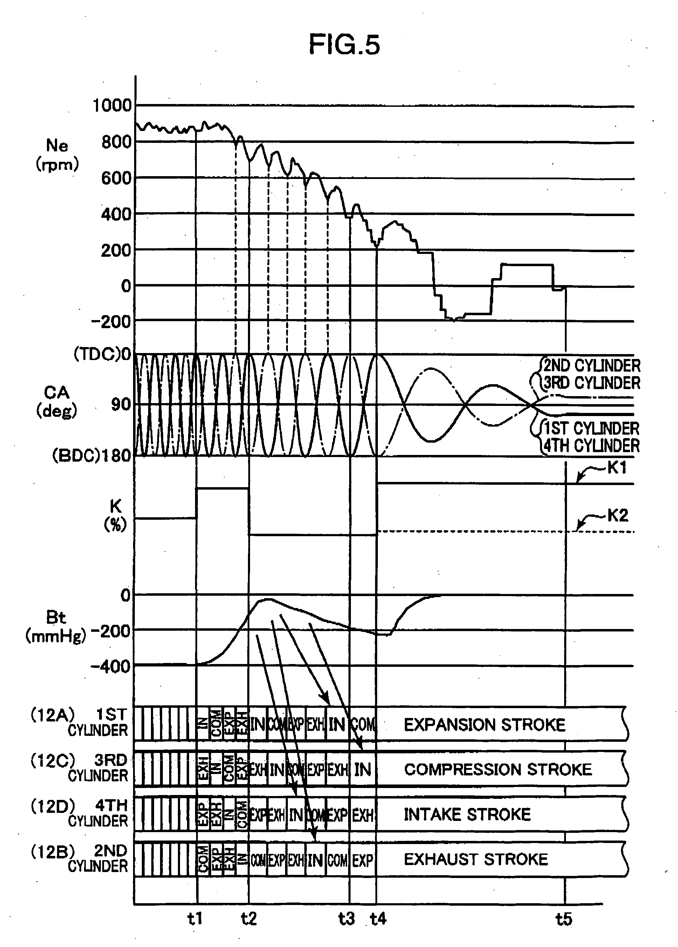

FIG. 4 is a time chart showing how engine speed Ne, boost pressure (intake air pressure) Bt and opening (throttle opening) K of the throttle valve 23 vary during a sequence of automatic engine stop by the aforementioned control operation of the ECU 2. FIG. 5 is an enlarged time chart showing part of the engine speed Ne charted in FIG. 4 over a time range from about a point in time t1 to about a point in time t5, as well as changes in crank angle CA and a transition pattern of the successive strokes of the individual cylinders 12A-12D. For the sake of explanation to follow below, it is assumed that the first cylinder 12A is on the expansion stroke, the second cylinder 12B is on the exhaust stroke, the third cylinder 12C is on the compression stroke and the fourth cylinder 12D is on the intake stroke at automatic idle stop.

At a point in time t0 when the aforementioned automatic engine stop conditions are met, the ECU 2 sets a target engine speed (which is an idle speed at which the automatic engine stop conditions are met) to a value higher than an ordinary idle speed at which the engine is not caused to automatically stop, that is, a target engine speed of approximately 850 revolutions per minute (rpm) (at which an automatic transmission is set to a neutral range, or N range) if the engine is of a type of which ordinary idle speed is set at 650 rpm (at which an automatic transmission is set to a drive range, or D range), for example. By performing such a control operation, the ECU 2 stabilizes the engine speed Ne at a point slightly higher than the ordinary idle speed. Also, the ECU 2 regulates the opening K of the throttle valve 23 such that the boost pressure Bt stabilizes at a relatively high specific level (i.e., approximately -400 mm Hg).

At the point in time t1 when the engine speed Ne becomes stabilized at the aforementioned target engine speed, the ECU 2 cuts off fuel injection and causes the engine speed Ne to drop. Also, at the point in time t1 (first specified point in time) when the fuel injection is interrupted in an initial stage of the control operation for automatically stopping the engine, the ECU 2 sets the opening K of the throttle valve 23 in such a fashion that the actual quantity of intake air becomes larger than a minimum quantity of intake air necessary for keeping the engine to run as would be reached at idle when in-cylinder air-fuel ratio, or excess air factor λ, is made equal to 1 (i.e., λ=1). More specifically, in a case where the engine is run by homogeneous charge combustion with the -cylinder air-fuel ratio (air-fuel ratio) set at 1 or approximately 1 (i.e., λ=1) immediately before the point in time t1, the ECU 2 increases the opening K of the throttle valve 23 (e.g., K=30%). In a case where the engine is run by stratified charge combustion of a lean air-fuel mixture on the other hand, the ECU 2 keeps the opening K of the throttle valve 23 unchanged, that is, the ECU 2 maintains the same relatively large opening K as used during the homogeneous charge combustion. FIGS. 4 and 5 show the working of the engine in the former case (i.e.. homogeneous charge combustion).

As a result of the aforementioned control operation, the boost pressure Bt begins to increase with a brief delay from the point in time t1 (when the engine is run by the homogeneous charge combustion immediately after the point in time t1) or the boost pressure Bt is maintained at a relatively high specific level (when the engine is run by the stratified charge combustion immediately after the point in time t1), whereby the ECU 2 accelerates exhaust gas scavenging process.

The ECU 2 causes the alternator 28 to once stop generating electric power at the point in time t1 to thereby reduce rotational resistance (friction) of the crankshaft 3 and prevent the engine speed Ne from decreasing too quickly.

When the fuel injection is interrupted at the point in time t1 in the aforementioned fashion, the engine speed Ne begins to decrease. Subsequently, the ECU 2 causes the throttle valve 23 to close at a point in time t2 (second specified point in time) when it is verified that the engine speed Ne has become equal to or lower than a predetermined reference engine speed N2, such as 760 rpm. As a result, the boost pressure Bt begins to decrease with a brief delay from the point in time t2 and the quantity of air drawn into each of the first to fourth cylinders 12A-12D decreases. Intake air to be introduced into each cylinder 12 during a period from the point in time t1 to the point in time t2 when the throttle valve 23 is open is drawn through the common intake passage portion 21c and the surge tank 21b and led to the branched intake channels 21a of the individual cylinders 12A-12D. The intake air is sequentially introduced into one cylinder 12 to another which has gone into the intake stroke. In the example shown in FIG. 5, the intake air is sequentially introduced into the fourth cylinder 12D, the second cylinder 12B, the first cylinder 12A and the third cylinder 12C in this order. With the point in time t1 and the point in time t2 set as mentioned above, the first cylinder 12A (expansion stroke cylinder) takes in a larger quantity of intake air than the third cylinder 12C (compression stroke cylinder) in the illustrated example.

As the engine continues to run by inertia from the point in time t1, the engine speed Ne gradually drops from the point in time t1 and eventually reaches zero at the point in time t5. During this period of automatic engine stopping, the engine speed Ne gradually decreases down to zero while going up and down little by little a plurality of times (typically 10 times in a four-cycle four-cylinder engine) as shown in FIGS. 4 and 5.

Referring to the time chart of FIG. 5, shown by a solid line is a curve of the crank angle CA of the first cylinder 12A and the third cylinder 12C with TDC thereof regarded as 0* CA, and shown by an alternate long and short dashed line is a curve of the crank angle CA of the second cylinder 12B and the fourth cylinder 12D with TDC thereof regarded as 0* CA. Those curves shown by the solid line and the alternate long and short dashed line intersecting at 90° CA intervals are offset from each other by 180°, or are mutually in opposite phase. In the four-cycle four-cylinder engine like the one of the present embodiment, each successive cylinder 12 reaches the compression stroke TDC at intervals of 180° CA. Thus, the time chart of FIG. 5 indicates that, at each successive peak point (vertex) of the curves shown by the solid line and the alternate long and short dashed line, one of the cylinders 12 passes the compression stroke TDC where the crank angle is 0°.

Timing at which any one of the cylinders 12 is at the compression stroke TDC matches the timing where the engine speed Ne is at one valley (bottom) of an undulating pattern thereof. During the automatic engine stopping period shown in FIG. 5. the engine speed Ne briefly decreases considerably and increases again in repetitive cycles as the pistons 13 in the individual cylinders 12A-12D reach and go beyond the compression stroke TDC. It can be seen from FIG. 5 that the engine speed Ne gradually approaches zero while going up and down repetitively in small steps in this manner.

In the automatic engine stop sequence illustrated in FIG. 5, air pressure in the compression stroke cylinder 12C which approaches the compression stroke TDC after the engine has gone beyond the compression stroke TDC for the last time at a point in time t4 increases as the piston 13 in the compression stroke cylinder 12C rises due to Inertial force. As the piston 13 in the compression stroke cylinder 12C ascends in this fashion, there develops a compressive reaction force in the compression stroke cylinder 12C, whereby the piston 13 is forced back without going beyond TDC, causing the crankshaft 3 to turn in the reverse running direction. Since this reverse turning of the crankshaft 3 causes air pressure in the expansion stroke cylinder 12A to rise, the piston 13 in the expansion stroke cylinder 12A is forced back toward BDC by a resultant compressive reaction force, thereby causing the crankshaft 3 to turn again in the forward running direction. The crankshaft 3 stops after turning in the forward and reverse directions several times with the pistons 13 in the individual cylinders 12A-12D moving up and down in repetitive motion in this way. While positions where the pistons 13 eventually stop are determined generally by a balance between the compressive reaction forces exerted by the compression stroke cylinder 12C and the expansion stroke cylinder 12A, the piston stop positions are more or less affected by air intake resistance of the intake stroke cylinder 12D which is on the intake stroke as well as mechanical friction occurring in the engine, so that the piston stop positions vary with rotational inertia of the engine, or with the value of the engine speed Ne, at the point in time t4 when the engine goes beyond the compression stroke TDC for the last time.

Therefore, to cause the piston 13 in the expansion stroke cylinder 12A to stop within the aforementioned specified range R suited for restarting the engine, it is necessary to regulate the quantities of air introduced into the expansion stroke cylinder 12A and the compression stroke cylinder 12C in such a manner that these two cylinders 12A, 12C produce sufficiently large compressive reaction forces and the compressive reaction force produced by the expansion stroke cylinder 12A is greater than that produced by the compression stroke cylinder 12C by at least a specified amount. To achieve this, the BCU 2 of the present embodiment opens the throttle valve 23 to increase the opening K thereof immediately after fuel injection interruption at the point in time t1 so that specific quantities of air would be drawn into the expansion stroke cylinder 12A and the compression stroke cylinder 12C and, then, closes the throttle valve 23 after a lapse of a Specific time period at the point in time t2 to decrease the opening K thereof for regulating the quantities of intake air.

In actuality, however, individual components, such as the throttle valve 23, the intake ports 17 and the branched intake channels 21a, vary in shape from one engine to another and airflows drawn through these components exhibit different behaviors, causing a certain degree of variations in the quantities of air introduced into the Individual cylinders 12A-12D during the automatic engine stopping period and in the air intake resistance of the intake stroke cylinder 12D. In addition, there occurs variations in the mechanical friction in the engine from one engine to another due to differences in their characteristics and in engine temperature. Thus, even if the throttle valve 23 is controlled to open and close as discussed above, it is difficult to ensure that the pistons 13 in the cylinders 12 which will be on the expansion stroke and on the compression stroke at engine stop will stop at positions exactly within the aforementioned target range R.

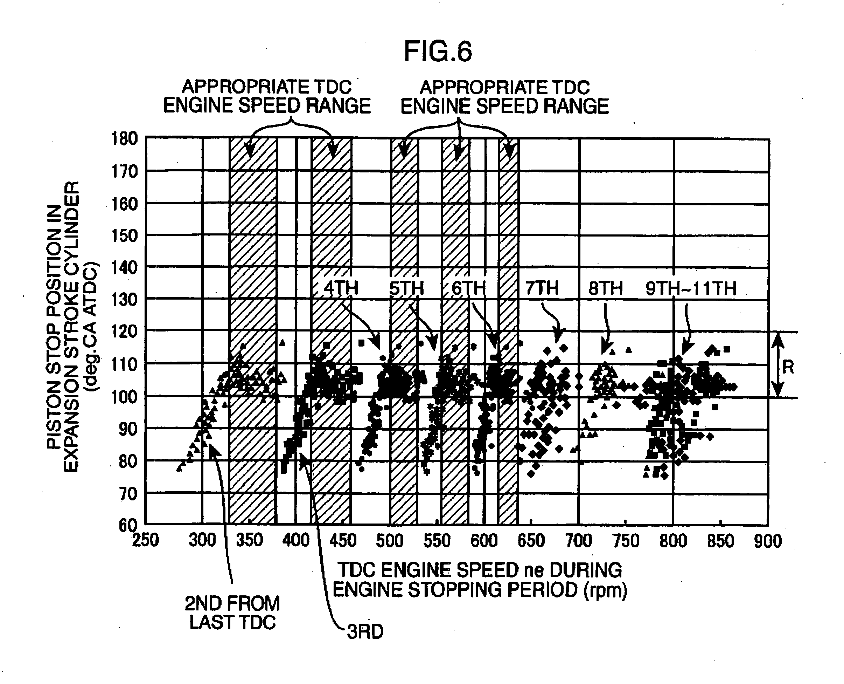

In this embodiment, particular attention is given to the fact that there is a distinct mutual relationship between TDC engine speed ne (which is the engine speed Ne measured when the piston 13 in any of the cylinders 12A-12D is at the compression stroke TDC) during a process of gradual engine speed decrease in the automatic engine stopping period and the position where the piston 13 in the expansion stroke cylinder 12A stops as shown in FIG. 6. The ECU 2 controls the engine by making use of this relationship.

After cutting the fuel injection at the point in time t1 when the engine speed Ne becomes equal to a specified speed, the ECU 2 holds the throttle valve 23 open for a specific time period, during which the ECU 2 measures the engine speed Ne each time the pistons 13 in the individual cylinders 12A-12D successively go beyond the compression stroke TDC while the engine continues to run by inertia. The engine speed Ne thus measured during the specific time period is the aforementioned TDC engine speed ne. The distribution chart of FIG. 6 shows the relationship between the TDC engine speed so measured during the engine stopping period ne and the position where the piston 13 in the expansion stroke cylinder 12A stops at engine stop, the horizontal axis of the chart representing the TDC engine speed ne and the vertical axis of the chart representing the piston stop position. The distribution chart of FIG. 6 showing the relationship between the TDC engine speed ne and the piston stop position of the expansion stroke cylinder 12A is obtained by repeating the aforementioned measurement and plotting cycles during the engine stopping period.

It can been seen from the distribution chart of FIG. 6 that there exists a specific correlation between the TDC engine speed ne and the piston stop position of the expansion stroke cylinder 12A during the engine stopping period. It is recognized from the plots of TDC engine speeds ne measured at the sixth to second TDCs from the last TDC that the piston 13 in the cylinder 12A which will be on the expansion stroke at engine stop is likely to stop within the aforementioned specified range R (100° to 120° after TDC, or ATDC, in terms of crank angle) suited for engine restart if the measured TDC engine speeds ne fall within particular ranges shown by hatching in the example of FIG. 6. These ranges shown by hatching in FIG. 6 suited for engine restart are hereinafter referred to as appropriate TDC engine speed ranges R.

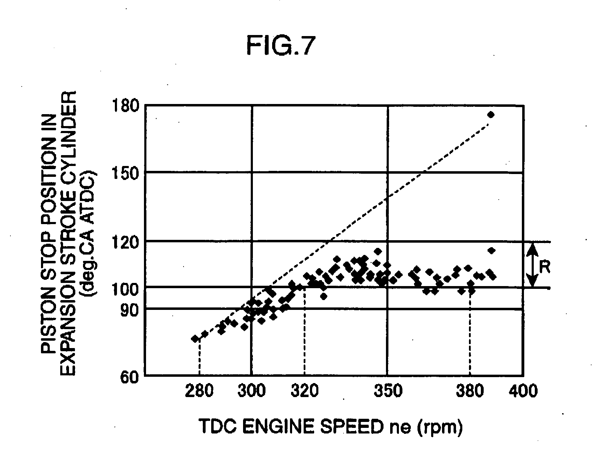

When particular attention is given to the TDC engine speeds ne at a point of TDC immediately before the last TDC (or at the second TDC from the last TDC) preceding automatic engine stop that corresponds to the engine speed Ne at a point in time t3 of FIG. 5, it can be seen from FIG. 7 that the measured TDC engine speeds ne fall within a range of approximately 280 to 380 rpm, the piston stop position gradually shifting toward the top dead center side (TDC side) with a decrease in the TDC engine speed ne on a lower engine speed side below approximately 320 rpm as shown in FIG. 7. On a higher engine speed side of the TDC engine speed ne equal to or higher than 320 rpm and, on the other hand, the piston stop position remains generally unchanged, falling approximately within the appropriate TDC engine speed range R regardless of whether the TDC engine speed ne is high or low.

A reason for the aforementioned characteristic distribution of the plotted TDC engine speeds ne is supposed to be that, if the TDC engine speed ne is on the higher engine speed side equal to 320 rpm or higher, sufficient quantities of air are filled into the expansion stroke cylinder 12A and the compression stroke cylinder 12C and the compressive reaction forces exerted by the air filled into these cylinders 12A, 12C cause their pistons 13 to stop around the middle of the respective strokes. A reason why the plotted piston stop positions are distributed along a line inclined obliquely down leftward on the lower engine speed side is supposed to be that each of the pistons 13 moving up and down turns in the opposite direction near the compression stroke TDC and then stops halfway on the current stroke without reaching a midpoint of the stroke due to deceleration by friction, for instance.

On the other hand, if the throttle valve 23 is kept closed without being opened after fuel injection interruption, the plotted piston stop positions are distributed along a straight broken line inclined obliquely upward to the right as shown in FIG. 7, so that the piston stop position varies with the value of the TDC engine speed ne. This is because if the throttle valve 23 is kept closed, the intake air pressure is maintained in a low state and the quantity of intake air is low. In this state, the compressive reaction forces exerted by the compression stroke cylinder 12A and the expansion stroke cylinder 12C decrease and, as a consequence, mutual influence between the engine speed (rotational inertia) and friction occurring in the engine becomes relatively large.

For the reasons stated above, the ECU 2 keeps the opening K of the throttle valve 23 at a relatively large value (e.g., 30% of maximum throttle opening) during a period from the point in time t1 when the fuel injection is interrupted until a specific period of time elapses, or up to the point in time t2 when the engine speed Ne drops to a value equal to or lower than the aforementioned reference engine speed N2 (e.g., approximately 760 rpm), to ensure satisfactory scavenging performance. Then, at the point in time t2 when the engine speed Ne becomes equal to or lower than the reference engine speed N2, the ECU 2 decreases the opening K of the throttle valve 23. During the same period, the ECU 2 regulates engine load (such as the amount of electric power generated by the alternator 28) such that the engine speed Ne decreases along an experimentally predetermined reference line (or such that the successively measured TDC engine speeds ne fall within the appropriate TDC engine speed ranges R shown in FIG. 6), for instance. As a result, it becomes easier for the piston 13 in the expansion stroke cylinder 12A to settle at an appropriate (target) position within the aforementioned range of 100° to 120**°** in terms of crank angle.

After the engine has gone beyond the compression stroke TDC for the last time at the point in time t4 shown in FIG. 5, none of the cylinders 12A-12D reaches TDC any longer, where the cylinders 12A-12D stop to go from one stroke to next (automatic idle stop) until the engine restarts. After the point in time t4 the tendency for the piston 13 in each cylinder 12 is to stop at the aforementioned appropriate position targeted while producing damping oscillation on the pertinent stroke, in which the crankshaft 3 turns in the reverse direction and the engine speed Ne takes a negative value while the piston 13 moves in the reverse direction thereof. At this point, the fourth cylinder 12D is on the intake stroke (as depicted in FIG. 5) and, if the air intake resistance of this cylinder 12D is large, the stop position of the piston 13 in the cylinder 12D tends to become unstable. Particularly because the air intake resistance acting on the piston 13 in the cylinder 12D increases as the piston 13 moves toward BDC, the piston 13 is likely to stop closer to TDC than the targeted appropriate position. Since the piston 13 in the intake stroke cylinder 12D and the piston 13 in the expansion stroke cylinder 12A move in phase (i.e., in a synchronized way), the piston 13 in the expansion stroke cylinder 12A tends to stop at a position closer to TDC than the targeted position.

Under such circumstances, a point in time approximately equal to (or slightly retarded from) the aforementioned point in time t4 is regarded as a third specified point in time, and the ECU 2 increases the opening K of the throttle valve 23 up to a first specified opening (or opening K1 shown in FIG. 5, where K1≈40%, for example) to decrease the air intake resistance acting on the piston 13 in the cylinder 12D in this embodiment. As a consequence, it becomes possible to cause the piston 13 to stop at a targeted position corresponding to a balance between the quantities of air introduced into the expansion stroke cylinder 12A and the compression stroke cylinder 12C without exerting any influence on the balance of the intake air quantities.

For the execution of the aforementioned control operation, it is necessary to instantly determine that the current point in time t4 is a point where the engine goes beyond the compression stroke TDC for the last time and predict at the point in time t4 that the engine (i.e., the piston 13 in the compression stroke cylinder 12C) does not go beyond the next compression stroke TDC. For this purpose, the ECU 2 detects the time when the engine has gone beyond the compression stroke TDC for the last time. The ECU 2 compares the engine speed Ne detected when each of the pistons 13 goes beyond the compression stroke TDC successively with a specific engine speed (e.g., 260 rpm) which is experimentally predetermined, for instance, and judges that the last compression stroke TDC has been reached at the point in time t4 when the detected engine speed Ne becomes equal to or lower than the experimentally predetermined specific engine speed. Here, the higher the TDC engine speed ne detected when the last compression stroke TDC is reached, the closer to a latter part of the current stroke the piston 13 in each cylinder 12 becomes likely to stop at (i.e., closer to BDC in the case of the piston stop position of the expansion stroke cylinder 12A. closer to TDC in the case of the piston stop position of the compression stroke cylinder 12C).

It is to be noted out that, immediately before engine stop, the balance between the quantities of air introduced into the expansion stroke cylinder 12A and the compression stroke cylinder 12C on the final intake stroke of these cylinders 12A, 12C is affected also by the boost pressure Bt. In particular, the point in time t3 of FIG. 5 when the second from the last compression stroke TDC before engine stop is reached is a starting point of the final intake stroke of the compression stroke cylinder 12C, and the boost pressure Bt exerts a marked influence on the balance of the intake air quantities at this point in time t3. When the boost pressure Bt is low (closer to vacuum), the quantity of air introduced into the compression stroke cylinder 12C decreases and, as a result, the stop position of the piston 13 in the compression stroke cylinder 12C tends to become closer to TDC (closer to BDC in the expansion stroke cylinder 12A). A high boost pressure Bt (closer to atmospheric pressure) gives an opposite result.

Therefore, in a case where the TDC engine speed ne detected when the last compression stroke TDC is reached is high and the boost pressure Bt at the point in time t3 when the second from the last compression stroke TDC before engine stop is reached is low, the piston 13 in the expansion stroke cylinder 12A is under conditions where the same is likely to stop closer to the latter part of the current stroke, so that the piston 13 in the expansion stroke cylinder 12A will potentially stop at the targeted piston stop position (i.e., within 100° to 120° ATDC in terms of crank angle). If control operation for increasing the opening K of the throttle valve 23 up to the aforementioned first specified opening K1 is performed under such conditions, the piston stop position becomes closer to the latter part of the current stroke, causing increased risk of going away from the targeted piston stop position. Thus, in such a case, the opening K of the throttle valve 23 at the third specified point in time is set to a second specified opening (or opening K2 shown in FIG. 5) which is smaller than the first specified opening K1 (or closed) in the present embodiment to suppress an increase in the quantity of intake air, so that the piston stop position of the expansion stroke cylinder 12A would not become too close to BDC.

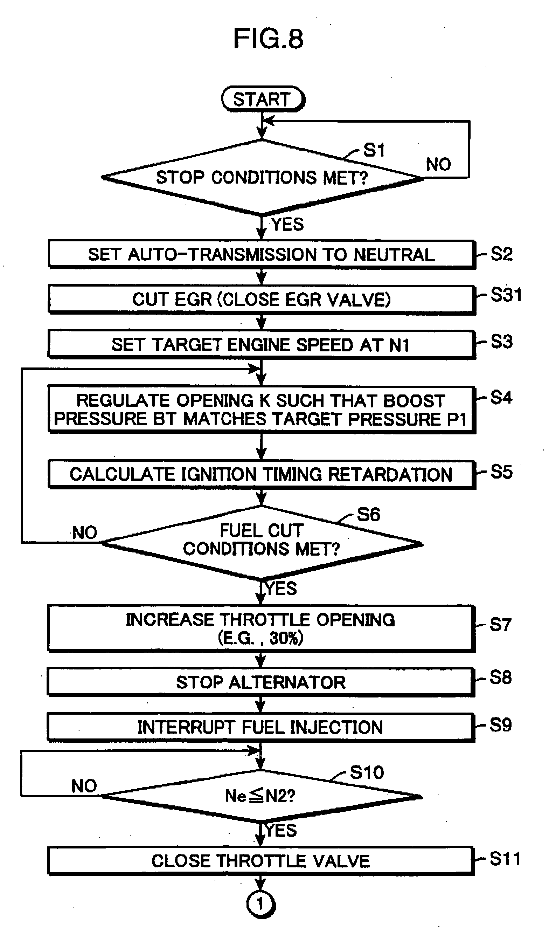

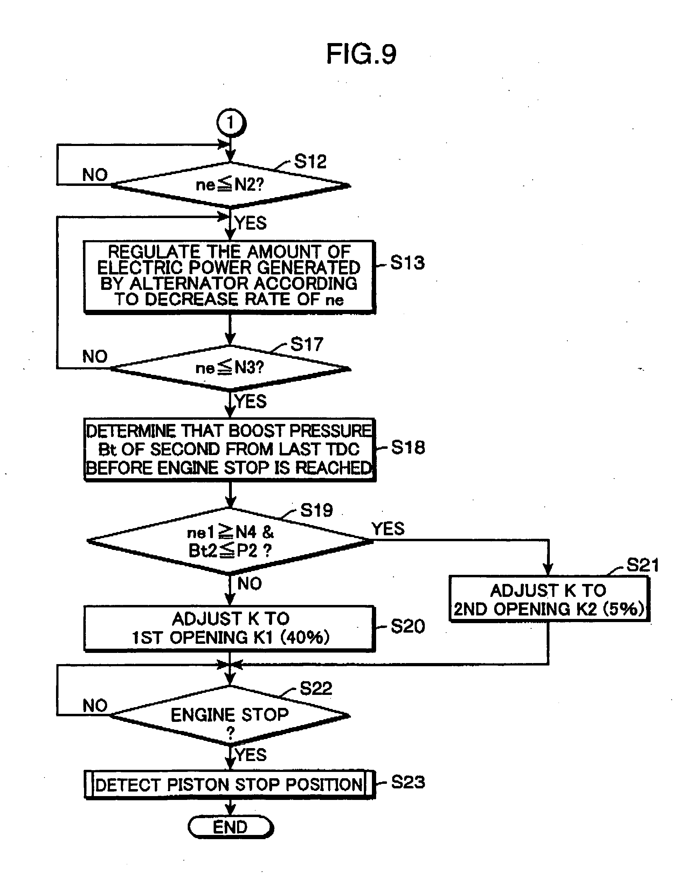

The control operation performed by the ECU 2 for automatically stopping the engine is now described in detail with reference to flowcharts given in FIGS. 8 and 9. Shown in these flowcharts is a sequence of the automatic engine stop control operation which starts from homogeneous charge combustion conditions in which the in-cylinder air-fuel ratio is set at or in the vicinity of the stoichiometric air-fuel ratio. Immediately following the beginning of this control operation, the ECU 2 judges whether the aforementioned automatic engine stop conditions have been satisfied based on the sensing signals fed from the individual sensors 25, 26, 30-34 in step S1. Specifically, if it is verified that a brake switch has been kept ON for a specific period of time, the amount of charge left in a battery is equal to or more than a predetermined value and vehicle speed is equal to or less than a specified value (e.g., 10 km/h), the ECU 2 judges that the automatic engine stop conditions have been satisfied, and if any one of these requirements is not met, the ECU 2 judges that the automatic engine stop conditions have not been satisfied.

If fulfillment of the automatic engine stop conditions is verified in step S1 above (Yes in step S1), the ECU 2 sets the automatic transmission to the neutral (N) range to bring the engine into a zero-load state in step S2, closes an exhaust gas recirculation (EGR) valve (not shown) provided in an EGR passage to cut recirculation of exhaust gas in step S31, and sets a target value N1 (target engine speed N1) of the engine speed Ne to a value N1 higher than the aforementioned ordinary idle speed (e.g., approximately 850 rpm) in step S3. Also, the BCU 2 regulates the opening K of the throttle valve 23 (or increase the opening K of the throttle valve 23) such that the boost pressure Bt becomes equal to a target pressure P1 which is set at approximately -400 mmHg, for instance, in step S4, and calculates the amount of retardation of ignition timing in such a way that the engine speed Ne becomes equal to the target engine speed N1 in step S5. With this arrangement, the throttle opening K is fed back for matching the boost pressure Bt to the target pressure P1, and the amount of retardation of ignition timing is fed back for matching the engine speed Ne to the target engine speed N1. This sequence is referred to as engine speed feedback control operation.

In step S1 above, the ECU 2 judges whether the automatic engine stop conditions have been satisfied at a point in time when the vehicle speed becomes equal to or lower than 10 km/h. Thus, it is possible to set the idle speed at fulfillment of the automatic engine stop conditions to a value (e.g., 850 rpm) higher than the ordinary idle speed (e.g., 650 rpm in the D range of the automatic transmission) at which the engine is not caused to automatically stop and carry out steps S2 and S3 before the engine speed Ne drops down to the ordinary idle speed (650 rpm). Therefore, it is not necessary to increase the engine speed Ne up to the target engine speed N1 (850 rpm) after the engine speed Ne has dropped to the ordinary idle speed. This arrangement is advantageous in that the engine does not give any noticeable discomfort to the driver or passengers as a result of an increase in engine speed.

When the automatic engine stop conditions have been satisfied in step S2 above, the ECU 2 shifts the automatic transmission from a "drive" position (D range) to the a "neutral" position (N range) at the point in time t0 to relieve the automatic transmission from a heavy load and sets the target engine speed to N1. As a consequence, the engine speed Ne increases from the point in time to and stabilizes as depicted in FIG. 4.

Then, the ECU 2 judges in step S6 whether fuel cut conditions (i.e., conditions for interrupting fuel injection) have been satisfied, or whether the engine speed Ne has become equal to the aforementioned target engine speed N1 and the boost pressure Bt has become equal to the aforementioned target pressure P1. If the judgment result in step S6 is in the negative (No in step S6), the ECU 2 returns to step S4 and reexecutes the aforementioned control operation of steps S4 to S6. If the judgment result is in the affirmative (Yes in step S6) at the point in time t1 of FIGS. 4 and 5, the ECU 2 increases the opening K of the throttle valve 23 to a relatively large value (approximately 30%) in step S7, sets the amount of electric power generated by the alternator 28 to 0 to interrupt power generation in step S8, and cuts off fuel injection in step S9.

Subsequently, to confirm that the engine speed Ne begins to decrease upon cutting off the fuel injection at the point in time t1, the ECU 2 judges in step S10 whether the engine speed Ne has become equal to or less than the reference engine speed N2 which is preset at approximately 760 rpm. Then, at the point in time t2 when the judgment result in step S10 is in the affirmative (Yes in step S10), the ECU 2 causes the throttle valve 23 to close in step S11. As a result, the boost pressure Bt which is regulated to approach atmospheric pressure by opening the throttle valve 23 in step S7 begins to drop after a specific time lag from throttle valve closing action.

The engine starting system of the above-described embodiment is structured such that the ECU 2 closes off the throttle valve 23 at the point in time t2 when the engine speed Ne is judged to have become equal to or less than the reference engine speed N2. According to the invention, the foregoing embodiment may be modified in such a fashion that the ECU 2 closes off the throttle valve 23 at a point in time where the engine speed Ne measured when one of the pistons 13 passes over the compression stroke TDC, that is, the TDC engine speed ne is judged to have become equal to or lower than the reference engine speed N2.

Next, the ECU 2 judges in step S12 whether or not the TDC engine speed ne has become equal to or lower than the reference engine speed N2 which is preset at approximately 760 rpm. If the judgment result in step S12 is in the affirmative (Yes in step S12), the ECU 2 controls the engine in such a manner that the engine speed Ne decreases along the aforementioned predetermined reference line. In this embodiment, the ECU 2 regulates the amount of electric power generated by the alternator 28 such that successively measured TDC engine speeds ne fall within the appropriate TDC engine speed ranges R shown in FIG. 6 in step S13. Specifically, when the measured TDC engine speed ne is high, the ECU 2 Increases the amount of electric power generated by the alternator 28 to increase the rotational resistance of the crankshaft 3 and raise the decrease rate of the engine speed Ne so that the TDC engine speeds ne in succeeding cycles would approach the predetermined reference line. When the measured TDC engine speed ne is rather low on the contrary, the ECU 2 decreases the amount of electric power generated by the alternator 28.

As the pistons 13 in the individual cylinders 12 successively pass the compression stroke TDCs one after another, the ECU 2 judges whether or not the TDC engine speed ne is equal to or less than a specified value N3 in step S17. This specified value N3, set at approximately 260 rpm, for Instance, is a value corresponding to the engine speed Ne measured when the engine goes beyond the compression stroke TDC for the last time in the aforementioned process of engine speed decrease along the predetermined reference line. Also, the ECU 2 memorizes the boost pressures Bt detected at each point in time when the pistons 13 in the individual cylinders 12A-12D successively go beyond TDC.

If the judgment result in step S17 is in the negative (No in step S17), the ECU 2 returns to step S13 and reexecutes the aforementioned control operation of steps S13 and S17. If the judgment result is in the affirmative (Yes in step S17), on the other hand, the ECU 2 determines that the engine has gone beyond the compression stroke TDC for the last time at the point in time t4 when the TDC engine speed ne becomes equal to or less than the specified value N3. Also, at the point in time t4, the ECU 2 reads out the boost pressure Bt detected and memorized at the compression stroke TDC one cycle earlier (i.e., the point in time t3) and determines that this boost pressure Bt is of the second from the last compression stroke TDC before engine stop in step S18.

Based on the TDC engine speed ne detected at the last compression stroke TDC is reached (hereinafter referred to as the final TDC engine speed nel) and the boost pressure Bt at the second from the last compression stroke TDC. before engine stop (hereinafter referred to as the boost pressure Bt2), the ECU 2 judges in step S19 whether or not there is an increased tendency for each piston 13 to stop closer to the latter part of the current stroke (closer to BDC in the case of the piston stop position of the expansion stroke cylinder 12A). Specifically, when the final TDC engine speed nel is equal to or higher than a specified engine speed N4 (e.g., 200 rpm) and the boost pressure Bt2 is equal to or less (closer to vacuum) than a first specified pressure P2 (e.g., -200 mmHg), it can be judged there is an increased tendency for each piston 13 to stop closer to the latter part of the current stroke, which means that the piston stop position of the expansion stroke cylinder 12A tends to become close to 120**°** within the aforementioned target range R of 100° to 120° ATDC in terms of crank angle.

If the judgment result in step S19 is in the negative (No in step S19), there is not so great a tendency for each piston 13 to stop closer to the latter part of the current stroke but there is a tendency for each piston 13 to stop relatively close to an early part of the current stroke, which means that the piston stop position of the expansion stroke cylinder 12A tends to become close to 100° ATDC or less than 100° ATDC in terms of crank angle within the aforementioned target range R.

Under such circumstances, the ECU 2 causes the throttle valve 23 to open such that the piston 13 of the expansion stroke cylinder 12A can stop within the target range R in a reliable fashion. Specifically, the ECU 2 increases the opening K of the throttle valve 23 to achieve the first specified opening K1 which is set to approximately 40%, for example, and thereby increases the intake air quantity in step S20. In this way, the ECU 2 decreases the air intake resistance of the intake stroke cylinder 12D and makes it easier for each piston 13 to stop closer to the latter part of the current stroke. As a result, it is possible to prevent, as much as possible, the piston stop point of the expansion stroke cylinder 12A from occurring at a point ahead of an earlier limit (100° ATDC in terms of crank angle) of the aforementioned target range R (100° to 120° ATDC) and further improve the accuracy of stopping the piston 13 within the target range R.

If the judgment result in step S19 is in the affirmative (Yes in step S19), on the other hand, the engine has a large rotational inertia, the quantity of intake air introduced into the compression stroke cylinder 12C in the final intake stroke is small and the compressive reaction force is low. All these conditions for causing the piston 13 to stop closer to the latter part of the current stroke are met in this case. Thus, the ECU 2 regulates the opening K of the throttle valve 23 to match a second specified opening K2 in step S21, wherein the second specified opening K2 is close to the opening of the throttle valve 23 achieved when the same is almost closed in step S7, e.g., K2-5%. This second specified opening K2 of the throttle valve 23 may be a still smaller opening or even zero (fully closed), depending on characteristics of the engine. In this way, the ECU 2 causes an appropriate level of air intake resistance to occur in the intake stroke cylinder 12D so that the piston 13 would not go further toward the latter part of the current stroke beyond a point in the target range R. As a result, it is possible to prevent, as much as possible, the piston stop point of the expansion stroke cylinder 12A from occurring at a point beyond a later limit (120° ATDC in terms of crank angle) of the aforementioned target range R (100° to 120° ATDC) and further improve the accuracy of stopping the piston 13 within the target range R.

As the engine speed Ne gradually decreases in the aforementioned fashion, the ECU 2 judges in step S22 whether the engine has eventually reached a state of automatic idle stop. If the judgment result in step S22 is in the affirmative (Yes in step S22), the ECU 2 completes the aforementioned control operation after executing a piston stop position detecting sequence in a subroutine of step S23 for detecting stop positions of the pistons 13. based on the sensing signals fed from the earlier-mentioned two crank angle sensors 30, 31. as will be later discussed.

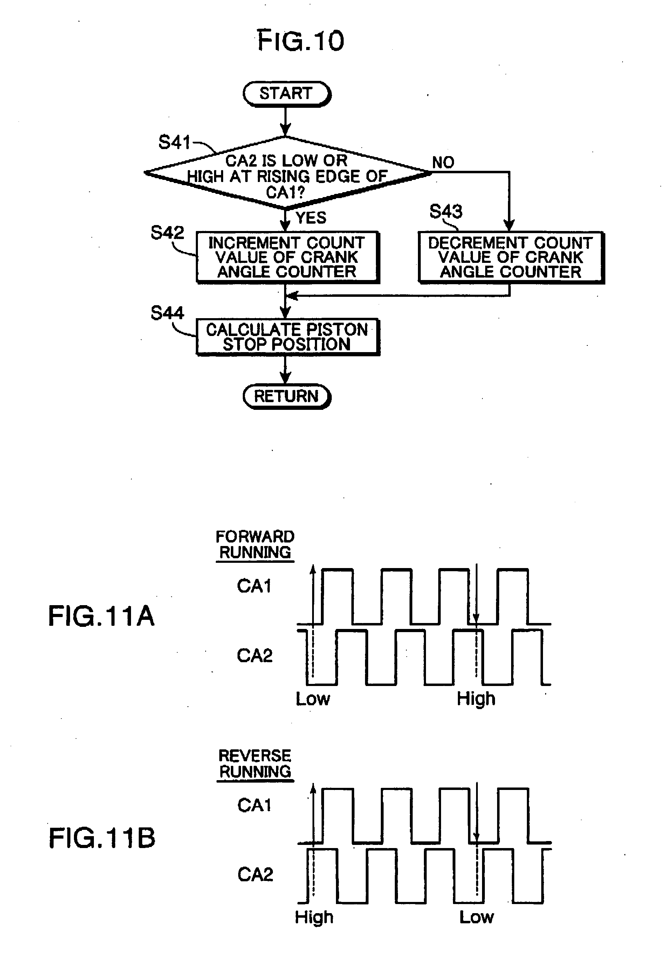

FIG. 10 is a flowchart showing the piston stop position detecting sequence executed in the subroutine of step S23 shown in FIG. 9. After the piston stop position detecting sequence has begun, the ECU 2 first judges in step S41, based on the first crank angle signal CA1 output from the first crank angle sensor 30 and the second crank angle signal CA2 output from the second crank angle sensor 31, whether the second crank angle signal CA2 is Low at each rising edge of the first crank angle signal CA1 and High at each falling edge of the first crank angle signal CA1, or whether the second crank angle signal CA2 is Low at each falling edge of the first crank angle signal CA1 and High at each rising edge of the first crank angle signal CA1. In other words, the ECU 2 judges in step S41 whether the first and second crank angle signals CA1, CA2 are phase-offset as shown in FIG. 11A indicating that the crankshaft 3 (engine) is turning in the forward direction or the first and second crank angle signals CA1, CA2 are phase-offset as shown in FIG. 11B indicating that the crankshaft 3 (engine) is turning in the reverse direction.

More specifically, when the engine runs in the forward direction, the second crank angle signal CA2 lags the first crank angle signal CA1 in phase by about half the pulselength and, therefore, the second crank angle signal CA2 becomes Low at the rising edge of each successive pulse of the first crank angle signal CA1 and High at the falling edge of each successive pulse of the first crank angle signal CA1 as shown in FIG. 11A. When the engine runs in the reverse direction, on the contrary, the second crank angle signal CA2 leads the first crank angle signal CA1 in phase by about half the pulselength and, therefore, the second crank angle signal CA2 becomes High at the rising edge of each successive pulse of the first crank angle signal CA1 and Low at the falling edge of each successive pulse of the first crank angle signal CA1 as shown in FIG. 11B.

If the engine is judged to be running in the forward direction (Yes in step S41), the ECU 2 increments a count value of a crank angle counter for measuring changes in the crank angle in step S42. If the engine is judged to be running in the reverse direction (No in step S41), on the contrary, the ECU 2 decrements the count value of the crank angle counter in step S43. After the engine has stopped, the ECU 2 determines the piston stop position by examining the count value of the crank angle counter in step S44.

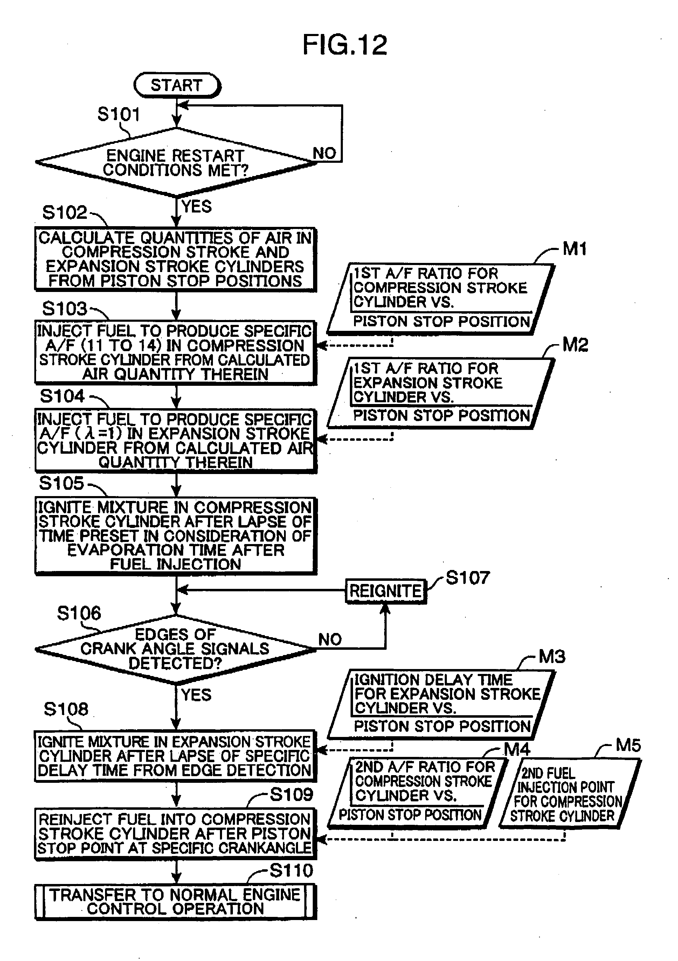

Now, engine restart control operation performed by the ECU 2 for restarting the engine which has automatically stopped in the aforementioned manner is described with reference to a flowchart given in FIG. 12. First, the ECU 2 judges in step S101 whether the earlier-mentioned predefined conditions for engine restart, or engine restart conditions, have been met. If none of these engine restart conditions have been satisfied yet (No in step S101), the ECU 2 waits until the conditions are met. When the accelerator pedal has been depressed for restarting the vehicle from idle stop or battery voltage has dropped, for Instance, the ECU 2 judges that the engine restart conditions have been satisfied (Yes in step S101) and, in this case, the ECU 2 calculates the quantities of air in the compression stroke cylinder 12C and the expansion stroke cylinder 12A based on the stop positions of the pistons 13 determined in the aforementioned stop position detecting subroutine (FIG. 10) in step S102. More specifically, the ECU 2 calculates current volumes of the combustion chambers 14 in the compression stroke cylinder 12C and the expansion stroke cylinder 12A from the stop positions of the pistons 13. Further, the ECU 2 determines the quantities of fresh air in the compression stroke cylinder 12C and the expansion stroke cylinder 12A based on the fact that the individual cylinders 12A-12D including the expansion stroke cylinder 12A are filled almost entirely with fresh air since the engine stops upon turning several times after fuel Injection interruption at idle engine stop and that the interior of the compression stroke cylinder 12C and the expansion stroke cylinder 12A is approximately at atmospheric pressure at engine stop as stated earlier.

In succeeding step S103, the ECU 2 causes the fuel injector 16 of the compression stroke cylinder 12C to inject the fuel in such a quantity that produces a specific air-fuel ratio, or a first air-fuel ratio, for the compression stroke cylinder 12C with the quantity of air therein calculated in step S102 above. Then, in step S104, the ECU 2 causes the fuel injector 16 of the expansion stroke cylinder 12A to inject the fuel to produce a specific air-fuel ratio for the expansion stroke cylinder 12A with the quantity of air therein calculated in step S102 above. These air-fuel ratios for the compression stroke cylinder 12C and the expansion stroke cylinder 12A are determined from maps M1, M2 which are preprogrammed according to the respective piston stop positions. Specifically, the maps M1, M2 are preprogrammed such that the first air-fuel ratio for the compression stroke cylinder 12C is set to a value lower than the stoichiometric air-fuel ratio (preferably within a range of 11 to 14), while the air-fuel ratio for the expansion stroke cylinder 12A is set to a value equal to or slightly lower than the stoichiometric air-fuel ratio.

In succeeding step S105, the ECU 2 causes the spark plug 15 of the compression stroke cylinder 12C to ignite a mixture produced therein after a lapse of a particular time period which is preset in consideration of fuel evaporation time required after fuel injection into the compression stroke cylinder 12C. Then, in step S106. the ECU 2 judges whether the piston 13 in the compression stroke cylinder 12C has moved based on whether any of the rising and falling edges of the crank angle signals CA1, CA2 output from the crank angle sensors 30, 31 has been detected within a specific time from ignition in step S105. If the piston 13 in the compression stroke cylinder 12C has not moved (No in step S106) due to misfire, for instance, the ECU 2 proceeds to step S107, in which the ECU 2 causes the spark plug 15 of the compression stroke cylinder 12C to reignite the mixture.

If any of the rising and falling edges of the crank angle signals CA1, CA2 output from the crank angle sensors 30, 31 has been detected (Yes in step S106), the ECU 2 proceeds to step S108, in which the ECU 2 causes the spark plug 15 of the expansion stroke cylinder 12A to ignite a mixture produced therein after a lapse of a specific ignition delay time from a point of edge detection, that is, approximately after a specific period of time during which reversing action of the engine finishes elapses. The ignition delay time mentioned above is determined from a map M3 which is preprogrammed according to the stop position of the piston 13. Further, when a specific crank angle, or a second fuel injection point, for the compression stroke cylinder 12C is reached, the ECU 2 proceeds to step S109, in which the ECU 2 causes the fuel injector 16 of the compression stroke cylinder 12C to reinject the fuel. In executing this step S109 of the second fuel injection, the ECU 2 determines a second air-fuel ratio for the compression stroke cylinder 12C from a map M4 which is preprogrammed according to the stop position of the piston 13 and, then, based on the second air-fuel ratio thus obtained, determines the quantity of fuel to be injected into the compression stroke cylinder 12C. At the same time, the ECU 2 determines from a map M5 an appropriate fuel injection point for compression stroke cylinder 12C. Specifically, as the fuel injected into the compression stroke cylinder 12C evaporates, in-cylinder gas temperature decreases due to absorption of latent heat by evaporation of the injected fuel. The ECU 2 sets the appropriate fuel injection point at a point where this in-cylinder temperature drop contributes to a decrease in compressive force exerted by the compression stroke cylinder 12C. More specifically, the ECU 2 sets the appropriate fuel injection point at an appropriate point from a middle part of the compression stroke to an early half of a latter part of the compression stroke.

The second air-fuel ratio is set at a properly rich-mixture air-fuel ratio at which the effect of latent heat absorption increases. Reinjection of the fuel (second fuel injection) into the compression stroke cylinder 12C serves to decrease the compressive force at about the compression stroke TDC of the compression stroke cylinder 12C, and this makes it possible for the piston 13 in the compression stroke cylinder 12C to go beyond the compression stroke TDC by the combustion produced in the expansion stroke cylinder 12A due to the ignition in step S108 above. Upon completion of the aforementioned engine restart control operation, the ECU 2 proceeds to step S110 and returns to normal engine control operation.

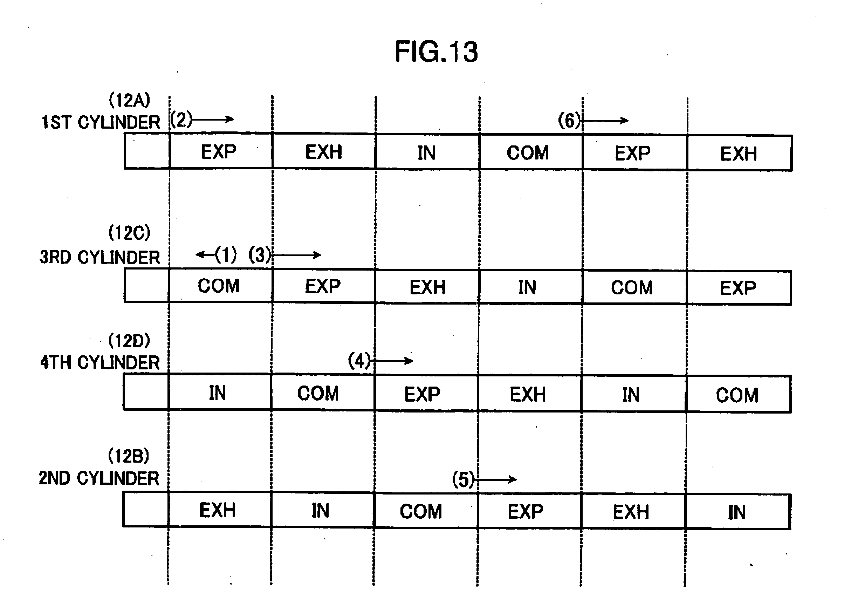

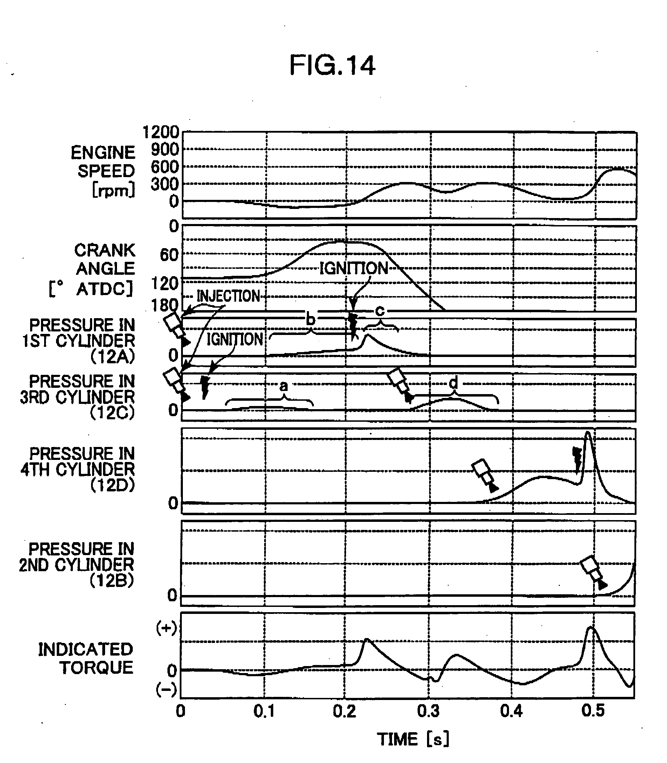

In carrying out the engine restart control operation as discussed above, the engine starting system (in particular the ECU 2) of the embodiment controls the engine as illustrated in FIGS. 13 and 14. Specifically, the ECU 2 causes initial combustion, marked by (1) in FIG. 13, to occur in the compression stroke cylinder (third cylinder) 12C at a rich-mixture air-fuel ratio slightly lower than the stoichiometric air-fuel ratio. With the aid of a combustion pressure (part "a" shown in FIG. 14) produced by this combustion (1), the piston 13 of the compression stroke cylinder 12C is forced down toward BDC, causing the engine to run in the reverse direction. Consequently, the piston 13 in the expansion stroke cylinder (first cylinder) 12A approaches TDC, so that air in the cylinder 12A is compressed leading to an increase in in-cylinder pressure (part "b" shown in FIG. 14). At a point in time when the piston 13 in the expansion stroke cylinder 12A has sufficiently approached TDC. the ECU 2 ignites the fuel already injected into the expansion stroke cylinder 12A to cause combustion therein, marked by (2) in FIG. 13, thereby driving the engine to run in the forward direction with a resultant combustion pressure (part "c" shown in FIG. 14). Subsequently, the ECU 2 causes the fuel injector 16 of the compression stroke cylinder 12C to inject the fuel with proper timing, marked by (3) in FIG. 13. Although the fuel thus injected into the compression stroke cylinder 12C is not burned in this cylinder 12C, the injected fuel serves to reduce the compressive force exerted by the compression stroke cylinder 12C due to the effect of latent heat absorption (part "d" shown in FIG. 14). Therefore, engine driving force is maintained by the aforementioned combustion in the expansion stroke cylinder 12A up to a point where the piston 13 goes beyond the second compression stroke TDC from the beginning of the engine restart operation. In other words, the engine driving force is maintained until additional engine driving force is given by combustion in the intake stroke cylinder (fourth cylinder) 12D.

With the air-fuel ratio in the compression stroke cylinder 12C made slightly lower than the stoichiometric air-fuel ratio to produce a richer mixture as mentioned above, it is possible to produce an enhanced engine driving force and execute engine reversing operation in a satisfactory fashion. Thus, the in-cylinder pressure of the expansion stroke cylinder 12A is increased and a sufficiently high level of combustion torque (engine driving force) can be generated.

Also, the ECU 2 performs fuel injection into the compression stroke cylinder 12C particularly for reducing the compressive force exerted thereby. This serves to ensure reliable engine restart by the combustion in the expansion stroke cylinder 12A.

Furthermore, since the fuel injection point for the intake stroke cylinder 12D is set at a point, marked by (4) in FIG. 13 in the middle part of the compression stroke or later, for example, appropriate for reducing the in-cylinder temperature and the compressive force by the effect of latent heat absorption by the injected fuel, it is possible to prevent autoignition (spontaneous combustion) in the compression stroke of the intake stroke cylinder 12D, i.e., before the compression stroke TDC. Also, since the ignition point for the intake stroke cylinder 12D is set at a point corresponding to the compression stroke TDC or later, it is possible to prevent combustion in the intake stroke cylinder 12D before the compression stroke TDC. Moreover, the aforementioned arrangement of the embodiment serves to enhance forward running engine operating efficiency while reducing the compressive reaction force.

Upon completion of the engine restart control operation at step S109 already discussed, the engine transfers to the normal engine control operation (step S110) in which the individual cylinders 12A-12D undergo successive combustion cycles, marked by (5), (6) and so on in FIG. 13.

While the invention has thus far been described with reference to one preferred embodiment thereof, the invention is not limited thereto but may be practiced in various forms otherwise than as specifically defined within the scope of the appended claims. For instance, although the foregoing discussion of the embodiment has illustrated an example in which the intake air quantity regulator formed mainly of the throttle valve 23 disposed in the common intake passage portion 21c further upstream of the surge tank 21b regulates the intake air quantity, the invention is not limited to this structure but may be so modified that the individual cylinders 12A-12D are provided with variable valve actuating mechanisms of the prior art serving as an intake air quantity regulator for varying the lift of the intake valve 19 of each of the four cylinders 12A-12D. Alternatively, the engine may employ multiple throttle valves of which valve bodies are disposed in the branched intake channels 21a for the individual cylinders 12A-12D for regulating the quantities of air introduced into the individual cylinders 12A-12D.

While the flowcharts of FIGS. 8 and 9 shows the automatic engine stop control operation performed when the engine is run by homogeneous charge combustion immediately before automatic engine stop, the engine may be run by stratified charge combustion at a lean-mixture air-fuel ratio immediately before automatic engine stop. In this case, the opening K of the throttle valve 23 is already set at a large value at the point of step S7, so that it is needed to simply maintain that throttle opening K unchanged.

As previously explained, the foregoing embodiment employs an arrangement for altering the opening K of the throttle valve 23 in two steps at point in time (third specified point in time) t4 and later according to the degree of tendency for each piston 13 stop closer to the latter part of the current stroke (refer to steps S19 to S21 of FIG. 9). As an alternative, the embodiment may be modified such that the opening K of the throttle valve 23 is varied in three steps or more, or continuously.

While the invention has been described with reference to the preferred embodiment in which the first air-fuel ratio for the compression stroke cylinder 12C is set at a rich-mixture air-fuel ratio lower than the stoichiometric air-fuel ratio at engine restart, the invention is not limited thereto. For example, the embodiment may be modified in such a way that the ECU 2 sets the first air-fuel ratio at a value larger than the stoichiometric air-fuel ratio by a specific amount to leave excess oxygen in the cylinder 12C and injects the fuel and ignite a mixture produced therein immediately after the compression stroke TDC in an ordinary compression stroke after the engine switches to the forward running direction so that second combustion can be produced immediately after the compression stroke TDC.

This modified arrangement is desirable particularly when the position of the piston 13 in the expansion stroke cylinder 12A at automatic engine stop is located closer to the TDC side within the aforementioned target range R appropriate for engine restart.

Specifically, when the position of the piston 13 in the expansion stroke cylinder 12A at automatic engine stop is located closer to the TDC side within the target range R, the volume of air in the cylinder 12A is rather small and, therefore, the quantity of fuel injected into the cylinder 12A is correspondingly decreased to suit the quantity of air in the cylinder 12A. On the other hand, the volume of air in the compression stroke cylinder 12C, which is in opposite phase with respect to the expansion stroke cylinder 12A, is rather large and, therefore, the quantity of fuel injected into the cylinder 12C can be increased to suit the quantity of air in the cylinder 12C. Thus, the embodiment may be so modified as to set the first air-fuel ratio at a high value (lean mixture) and the second air-fuel ratio at a value lower than the stoichiometric air-fuel ratio to burn the fuel in the compression stroke cylinder 12C during both reverse running motion (compression of air in the expansion stroke cylinder 12A) and forward running motion of the engine, such that combustion occurs in the compression stroke cylinder 12C in succession to combustion in the expansion stroke cylinder 12A during the forward running motion of the engine.

The engine starting system of the foregoing embodiment is structured such that the ECU 2 causes first combustion to occur in the compression stroke cylinder 12C for turning the crankshaft 3 a little in the reverse running direction at first and ignites the mixture compressed in the expansion stroke cylinder 12A when restarting the automatically stopped engine. The invention is not limited to the engine starting system thus structured but the embodiment may be modified in such a way that the engine is restarted by initial combustion produced in the expansion stroke cylinder 12A without turning in the reverse running direction at first.

Lastly, various parameters mentioned in the foregoing, such as piston stop position target ranges R, final TDC engine speeds nel-ne4, the specified openings K1, K2 and pressure values P1, P2, may be varied as appropriate according to engine characteristics, for instance.

In summary, an engine starting system according to a principal (first) aspect of the invention is for automatically stopping an engine by interrupting fuel supply for keeping the engine running when predefined automatic engine stop conditions are satisfied and for restarting the engine by injecting fuel at least into a cylinder which is on an expansion stroke at engine stop and by producing ignition and combustion therein when predefined engine restart conditions are satisfied. This engine starting system includes an intake air quantity regulator for regulating the quantity of air introduced into the cylinder, and an automatic engine stop controller for setting the intake air quantity regulator in such a state of controlling intake airflow that the intake air quantity is larger than a minimum intake air quantity necessary for keeping the engine running at a first specified time in an initial stage of automatic engine stop operation and for controlling the intake air quantity regulator to subsequently decrease the intake air quantity at a second specified time. The automatic engine stop controller detects a point in time when the engine lastly goes beyond compression stroke top dead center immediately before engine stop and increases the intake air quantity at a third specified time which is set at or later than the last point of going beyond the compression stroke top dead center.

In the context of this Specification, the expression "go (going) beyond the compression stroke top dead center" refers to a transition of any cylinder from the compression stroke to the expansion stroke via the top dead center (TOC) of a piston in the cylinder. Also, the expression "the point in time when the engine lastly goes beyond compression stroke top dead center immediately before engine stop" refers to the point in time when the cylinder which passes the compression stroke TDC for the last time immediately before engine stop.

According to the aforementioned principal aspect of the invention, the engine starting system works as follows. Specifically, in executing automatic engine stop control operation upon fulfillment of the automatic engine stop conditions, the engine starting system sets the intake air quantity regulator in such a manner that the intake air quantity becomes larger than the minimum intake air quantity necessary for keeping the engine running at the first specified time. This makes it possible ensure sufficient quantities of air introduced into individual cylinders and thereby realize efficiently enhanced exhaust gas scavenging performance. When the engine starting system works this way, air intake resistance of the engine decreases, making it possible to prevent engine speed from decreasing too quickly. This makes it possible to maintain a relatively high engine speed (or increase the number of intake, compression, expansion and exhaust strokes) during an automatic engine stopping period from a point of fuel supply interruption to a point of engine stop, so that it becomes easier to cause each piston to stop at an appropriate (target) position by properly controlling engine speed decrease rate. In addition, the increase in the number of strokes during the automatic engine stopping period serves to further enhance the exhaust gas scavenging performance.

As the automatic engine stop controller subsequently decreases the intake air quantity at the second specified time, the quantity of air in each cylinder does not increase unnecessarily during the automatic engine stopping period, whereby the engine starting system suppresses an increase in compressive reaction force acting on the piston at about the compression stroke TDC. Furthermore, since the increase in the compressive reaction force is suppressed in this way, it is possible to reduce minor variations In the engine speed as well as vibrations and acoustic noise.

The engine starting system of the invention can adjust a balance between the quantity of air introduced into the compression stroke cylinder on the final intake stroke and the quantity of air introduced into the expansion stroke cylinder on the final intake stroke by properly setting the second specified time. The piston stop position greatly depends on this balance between the quantities of air Introduced into the compression stroke cylinder and the expansion stroke cylinder. Specifically, there is a marked tendency for the piston in a cylinder into which a larger quantity of air is introduced to stop closer to BDC than the piston in a cylinder into which a smaller quantity of air is introduced. Taking advantage of this tendency, it is possible to determine an appropriate timing (second specified time) for reducing the intake air quantity so that the pistons will stop at targeted positions with high accuracy.

Subsequently, the automatic engine stop controller increases the intake air quantity again at the third specified time set at or later than the last point of going beyond the compression stroke TDC. After the engine lastly goes beyond compression stroke TDC, however, every piston stops on its current stroke without proceeding to a next stroke, so that intake and exhaust valves of both the compression stroke cylinder and the expansion stroke cylinder remain closed and, therefore, the increase in the intake air quantity at the third specified time does not produce any influence on the balance between the quantities of air introduced into the compression stroke cylinder and the expansion stroke cylinder on the final intake stroke. What is directly influenced by the increase in the intake air quantity at the third specified time and later is the Intake stroke cylinder into which air is introduced at that time. As intake air pressure increases if the intake air quantity is increased at the third specified time, the air intake resistance of the intake stroke cylinder decreases. This reduction in the air intake resistance causes the piston in the intake stroke cylinder to move more smoothly, serving thereby to decrease variations in the piston stop position.

After all, the aforementioned engine starting system of the invention can cause the pistons to stop at the targeted appropriate positions corresponding to in accordance with the balance between the quantities of air introduced into the compression stroke cylinder and the expansion stroke cylinder on the final intake stroke without exerting any influence on the balance of the intake air quantities with high accuracy by setting the third specified time at or later than the last point of going beyond the compression stroke TDC. Also, the engine starting system can restart the engine in a reliable fashion by doing so.

According to the invention, the third specified time may set either generally at the same point as the last compression stroke TDC or at a point retarded by a certain time lag from the last compression stroke TDC (corresponding to a time period until the intake valve of the compression stroke cylinder is fully closed from the last compression stroke TDC, for example).

According to a second aspect of the invention, an engine starting system modified from the aforementioned principal aspect causes the engine to once run in a reverse direction approximately down to the compression stroke top dead center of a cylinder which is on a compression stroke at engine stop by injecting the fuel into the initially compression stroke cylinder and producing ignition and combustion therein prior to combustion produced in the initially expansion stroke cylinder, and subsequently causes the engine to run in a forward direction by the initial combustion produced in the initially expansion stroke cylinder.

The aforementioned engine starting system of the second aspect of the invention produces initial combustion in the cylinder initially on the compression stroke at engine stop to once run the engine in the reverse direction at the beginning of engine restart. This initial reverse running motion of the engine causes the piston in the expansion stroke cylinder (of which internal pressure approximately matches the atmospheric pressure during engine stop) to move in the reverse direction as well. As the piston in the expansion stroke cylinder ascends in this way, air in the expansion stroke cylinder is compressed. Next combustion is produced in the expansion stroke cylinder in a high-pressure state thus produced, whereby the piston in the expansion stroke cylinder is forcefully pushed downward by the combustion produced therein, causing the engine to run in the forward direction. As this combustion in the expansion stroke cylinder generates a great torque acting on the engine in the forward running direction, it is possible to restart the engine in a highly reliable fashion. While it is essential to cause the pistons to stop within appropriate target ranges at engine stop to successfully perform engine restart control operation mentioned above, it is possible to satisfy this requirement with high accuracy and restart the engine in a still reliable fashion by controlling intake air quantities in the aforementioned manner.

According to a third aspect of the Invention, the engine starting system of the aforementioned second aspect may be structured such that the automatic engine stop controller sets the second specified time at a point in time when the quantity of air introduced during a final intake stroke of the cylinder which stops on the compression stroke becomes smaller than the quantity of air introduced during a final intake stroke of the cylinder which stops on the expansion stroke.

As mentioned in the present discussion of the invention, the "cylinder which stops on the compression stroke" or "the expansion stroke" does not necessarily refer to a particular cylinder but any cylinder which may eventually stop on the compression stroke or the expansion stroke at idle engine stop. Also, the "final intake stroke" refers to the "intake stroke" that any cylinder finally goes through or reaches before idle engine stop.

To once run the engine in the reverse direction at the beginning of engine restart as discussed above with reference to the second aspect of the invention, the piston in the compression stroke cylinder should preferably be located slightly closer to TDC at engine stop (approximately at midpoint between TDC and BDC) and the piston in the expansion stroke cylinder should preferably be located slightly closer to BDC.

Thus, in the aforementioned engine starting system of the third aspect of the invention, the quantity of air introduced during the final intake stroke of the expansion stroke cylinder is made larger than the quantity of air introduced during the final intake stroke of the compression stroke cylinder, so that the compressive reaction force exerted on the piston in the expansion stroke cylinder at about the compression stroke TDC becomes greater than the compressive reaction force exerted on the piston in the compression stroke cylinder at about the compression stroke TDC. As a result, it is possible to shift the piston in the expansion stroke cylinder closer to BDC than the piston in the compression stroke cylinder, making it more desirable for successful engine restart.

The intake air quantity is Increased to reduce the air intake resistance at the third specified time as discussed above. This serves to reduce variations in the piston stop position as well as to facilitate movement of the pistons toward BDC (in the air Intake direction), enabling the pistons to stop closer to BDC (toward a latter part of the stroke) more easily. More particularly, it becomes possible to cause the piston in the compression stroke cylinder to stop closer to TDC slightly toward the latter part of the compression stroke and the piston in the expansion stroke cylinder to stop closer to BDC slightly toward the latter part of the expansion stroke, and this serves to allow the pistons to stop at desirable positions much more easily.

According to a fourth aspect of the invention, the engine starting system of the aforementioned second or third aspect may further includes an intake air pressure sensor for detecting intake air pressure, wherein the automatic engine stop controller regulates the degree of increase in the intake air quantity at the third specified time according to the intake air pressure detected by the intake air pressure sensor for a specific time period during execution of the automatic engine stop operation.

The aforementioned balance between the quantities of air introduced into the compression stroke cylinder and the expansion stroke cylinder on the final intake stroke is affected also by a change in intake air pressure.

Thus, in the aforementioned engine starting system of the fourth aspect of the invention, the degree of increase in the intake air quantity at the third specified time is so regulated as to cancel out the influence of changes in the intake air pressure. This serves to reduce the influence of changes in the intake air pressure, if any, as much as possible. This can be achieved by an arrangement of a fifth aspect of the invention described below, for example.

According to the fifth aspect of the invention, the engine starting system of the aforementioned fourth aspect may be structured such that the automatic engine stop controller suppresses the amount of increase in the intake air quantity at the third specified time when the intake air pressure detected by the intake air pressure sensor during the final Intake stroke of the cylinder which stops on the compression stroke is equal to or less than a first specified pressure.

When the intake air pressure is low on the final intake stroke of the compression stroke cylinder, the intake air quantity decreases and the piston in the compression stroke cylinder becomes more likely to stop closer to TDC Slightly toward the latter part of the compression stroke than the targeted position. In the aforementioned engine starting system of the fifth aspect of the invention, the automatic engine stop controller suppresses the amount of increase in the intake air quantity at the third specified time. This serves to reduce ease of movement of the piston in the intake stroke cylinder toward BDC (toward the latter part of the stroke) and reduce the influence of changes in the intake air pressure, if any, as much as possible.

In the discussion of the present Specification, the intake air pressure, when detected as being a negative pressure, is regarded as *"small* (or *low)"* if the detected pressure is closer to vacuum, "*great* (or *high)"* if the detected pressure is closer to atmospheric pressure.

According to a sixth aspect of the invention, the engine starting system of one of the aforementioned first to fifth aspects may be structured such that the intake air quantity regulator is a throttle valve which is set to a closed or generally closed state when the intake air quantity is decreased at the second specified time and later, set to a first specified opening larger than either the closed or generally closed state when the intake air quantity is increased at the third specified time and later, and set to a second specified opening smaller than the first specified opening when the increase in the intake air quantity is suppressed even at third specified time and later.

According to a seventh aspect of the invention, the engine starting system of one of the aforementioned first to sixth aspects may be structured such that the intake air quantity regulator is provided in a common intake passage portion of an intake passage.

According to the aforementioned sixth aspect of the invention, the engine starting system can use the throttle valve having a simple structure as the intake air quantity regulator. Also, according to the aforementioned seventh aspect of the invention, the intake air quantity regulator is disposed in a common intake passage portion of the intake passage, so that the overall structure is simplified compared to an arrangement in which multiple intake air quantity regulators are provided in separate intake passages dedicated to the individual cylinders. In addition, although it is typically difficult for the arrangement of the seventh aspect, in which the intake air quantity regulator is disposed in a common intake passage portion of the intake passage, to regulate the intake air quantities of the individual cylinders, the aforementioned intake air quantity control operation makes it possible to successfully regulate the intake air quantities.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. An engine starting system for automatically stopping an engine(1) by interrupting fuel supply for keeping the engine running when predefined automatic engine stop conditions are satisfied and for restarting the engine by injecting fuel at least into a cylinder which is on an expansion stroke at engine stop and by producing ignition and combustion therein when predefined engine restart conditions are satisfied, said engine starting system comprising:
an intake air quantity regulator (23) for regulating the quantity of air introduced into said cylinder; and
an automatic engine stop controller (2) for setting said intake air quantity regulator (23) in such a state of controlling intake airflow that the intake air quantity is larger than a minimum intake air quantity necessary for keeping the engine running at a first specified time (t1) in an initial stage of automatic engine stop operation and for controlling said intake air quantity regulator (23) to subsequently decrease the intake air quantity at a second specified time (t2);
wherein said automatic engine stop controller (2) detects a point in time when the engine lastly goes beyond compression stroke top dead center immediately before engine stop and Increases the Intake air quantity at a third specified time (t4) which is set at or later than the last point of going beyond the compression stroke top dead center.

2. The engine starting system according to claim 1, wherein said engine starting system causes the engine to once run in a reverse direction approximately down to the compression stroke top dead center of a cylinder which is on a compression stroke at engine stop by injecting the fuel into said initially compression stroke cylinder and producing ignition and combustion therein prior to the initial combustion produced in said initially expansion stroke cylinder, and subsequently causes the engine to run in a forward direction by the initial combustion produced in said initially expansion stroke cylinder.

3. The engine starting system according to claim 2, wherein said automatic engine stop controller (2) sets said second specified time (t2) at a point in time when the quantity of air introduced during a final intake stroke of said cylinder which stops on the compression stroke becomes smaller than the quantity of air introduced during a final intake stroke of said cylinder which stops on the expansion stroke.

4. The engine starting system according to claim 2 or 3 further comprising:
an intake air pressure sensor (26) for detecting intake air pressure;
wherein said automatic engine stop controller (2) regulates the degree of increase in the intake air quantity at said third specified time (t4) according to the intake air pressure detected by said intake air pressure sensor (26) for a specific time period during execution of the automatic engine stop operation.

5. The engine starting system according to claim 4, wherein said automatic engine stop controller (2) suppresses the amount of Increase in the intake air quantity at said third specified time (t4) when the intake air pressure detected by said intake air pressure sensor (26) during the final intake stroke of said cylinder which stops on the compression stroke is equal to or less than a first specified pressure.

6. The engine starting system according to one of claims 1 to 5, wherein said intake air quantity regulator (23) includes a throttle valve (23) which is set to a closed or generally closed state when the intake air quantity is decreased at the second specified time (t2) and later, set to a first specified opening larger than either the closed or generally closed state when the intake air quantity is increased at the third specified time (t4) and later, and set to a second specified opening smaller than the first specified opening when the increase in the intake air quantity is suppressed even at third specified time (t4) and later.

7. The engine starting system according to one of claims 1 to 6, wherein said intake air quantity regulator (23) is provided in a common intake passage portion (21c) of an intake passage.
